# EUROPÄISCHE PATENTANMELDUNG

(11) **EP 1 591 737 A2**
(43) Veröffentlichungstag der Anmeldung: **02.11.2005**
(21) Anmeldenummer: 05005429.5
(22) Anmeldetag: 12.03.2005
(51) Int. Cl.: F26B 21/08

(54) **Trocknungsvorrichtung**

(30) Priorität: 29.04.2004 AT 7452004
(71) Anmelder: Arbeiter, Peter, 6900 Bregenz (AT)
(72) Erfinder: Arbeiter, Peter, 6900 Bregenz (AT)
(74) Vertreter: Hefel, Herbert

(57) **Zusammenfassung**

Eine Trocknungsvorrichtung für die Trocknung eines Gases umfasst parallele Kühlzweige (8, 9), von denen sich zu einem jeweiligen Zeitpunkt zumindest einer in seinem aktiven Zustand befindet, wobei in den Kühlzweigen (8, 9) jeweils ein Gas/Kältemittel-Wärmetauscher (11) angeordnet ist, der einen ersten Kanal, durch den im aktiven Zustand dieses Kühlzweiges (8, 9) das zu trocknende Gas strömt, und einen zweiten Kanal aufweist, der im aktiven Zustand dieses Kühlzweiges (8, 9) einen Verdampfer für ein in mindestens einem Kältemittel-Kreislauf umlaufendes Kältemittel bildet. Die Trocknungsvorrichtung umfasst weiters eine Umgebungsluft-Eingangsleitung (15), eine Umgebungsluft-Ausgangsleitung (20) und einen Umgebungsluft-Förderer (19), wobei im passiven Zustand eines jeweiligen Kühlzweiges (8, 9) zumindest zeitweilig die Umgebungsluft-Eingangsleitung (15) und Umgebungsluft-Ausgangsleitung (20) mittels der Umschalteinrichtung mit diesem Kühlzweig (8, 9) verbunden sind und der Umgebungsluft-Förderer (19) Umgebungsluft durch den ersten Kanal des in diesem Kühlzweig (8, 9) angeordneten Gas/Kältemittel-Wärmetauschers (11) fördert.

## Beschreibung

Die Erfindung betrifft eine Trocknungsvorrichtung für die Trocknung eines Gases, welches insbesondere in einem Kreislauf durch einen zu trocknendes Material aufnehmenden Trocknungsbehälter einer Trocknungsanlage geführt ist, mit einer Gas-Eingangsleitung zur Zuführung des zu trocknenden Gases und mit einer Gas-Ausgangsleitung für die Abführung des getrockneten Gases und mit parallelen Kühlzweigen, welche mittels einer Umschalteinrichtung jeweils zwischen einem aktiven Zustand, in welchem der Kühlzweig vom zu trocknenden Gas durchströmt wird und im Kühlzweig eine Kältetrocknung des Gases erfolgt, und einem passiven Zustand umschaltbar sind, wobei sich zu einem jeweiligen Zeitpunkt zumindest einer der Kühlzweige in seinem aktiven Zustand befindet und wobei in den Kühlzweigen jeweils ein Gas/Kältemittel-Wärmetauscher angeordnet ist, der einen ersten Kanal, durch den im aktiven Zustand dieses Kühlzweiges das zu trocknende Gas strömt, und einen zweiten Kanal aufweist, der im aktiven Zustand dieses Kühlzweiges einen Verdampfer für ein in mindestens einem Kältemittel-Kreislauf umlaufendes Kältemittel bildet.

Trocknungsvorrichtungen zur Trocknung eines Gases, insbesondere Luft, werden beispielsweise im Zusammenhang mit Anlagen zur Trocknung von Schüttgut, wie Kunststoffgranulat eingesetzt. Solches Schüttgut kann nach einer gewissen Lagerzeit oder nach der Herstellung zuviel Feuchtigkeit aufweisen, insbesondere wenn es hydroskopisch ist, um beispielsweise in Extrudern oder Spritzgussmaschinen verarbeitet werden zu können. Das Schüttgut muss dann vor der Verarbeitung getrocknet werden. Es sind hierzu bereits Trocknungsanlagen mit geschlossenen Kreisläufen für die Trocknungsluft bekannt geworden. Eine solche Trocknungsanlage geht beispielsweise aus der EP 626 191 A1 hervor. Mittels einer Fördereinrichtung wird Luft durch einen Adsorptionstrockner geführt, in der Folge aufgeheizt und in den Schüttgutbehälter eingeblasen. Nach dem Durchströmen des Schüttguts wird die Luft der Eingangsseite der Fördereinrichtung zugeführt. Nach einer gewissen Betriebszeit ist das Adsorptionsmittel des Adsorptionstrockners mit Feuchtigkeit gesättigt, sodass der gewünschte Taupunkt von beispielsweise 40° C der Luft nach ihrem Durchströmen des Adsorptionsmittels nicht mehr erreicht wird. Es muss dann ein Regenerationszyklus durchgeführt werden. Hierzu wird die Förderrichtung der Fördereinrichtung umgekehrt und Umgebungsluft erhitzt und durch das Adsorptionsmittel geführt, sodass das Adsorptionsmittel von der heißen Luft regeneriert wird.

Nachteilig an dieser Trocknungsanlage sind die erforderlichen Serviceleistungen, da das Adsorptionsmaterial immer wieder aufwendig gewechselt werden muss, sowie der immer noch relativ hohe Gesamtenergieverbrauch der Einrichtung.

Eine weitere Trocknungsvorrichtung zur Trocknung eines Gases, insbesondere Luft, in Form eines Adsorptionstrockners geht aus der DE 32 26 502 A1 hervor, wobei das Adsorptionsmittel zusätzlich gekühlt wird, um die Feuchtigkeitsaufnahmekapazität des Adsorptionsmittels zu erhöhen.

Bei einem anderen Typ einer bereits bekannten Trocknungsanlage für Schüttgut wird getrocknete Druckluft durch eine Druckluftleitung zugeführt. Ein Druckreduzierventil reduziert den Druck der zugeführten Druckluft auf einen voreingestellten Wert. Von einer Heizung wird die Luft auf die gewünschte Temperatur aufgeheizt und strömt in der Folge in den Schüttgutbehälter in der Nähe seiner Entnahmeöffnung ein. Nach dem Durchströmen des Schüttguts strömt die mit Feuchtigkeit angereicherte Luft durch einen Abluftauslass aus. Zum Trocknen der zugeführten getrockneten Druckluft wird die Druckluft üblicherweise durch einen Molekularsiebtrockner geführt, wonach ihr Taupunkt beispielsweise im Bereich von -40° C bis -50° C liegt. Zur Vortrocknung der Druckluft kann diese vor dem Durchströmen des Molekularsiebtrockners zunächst mit einem handelsüblichen Kältetrockner auf eine Taupunkttemperatur von 3° C getrocknet werden, wobei Kondensat ausfallen wird. Die dem Molekularsiebtrockner zugeführte Druckluft weist somit einen Taupunkt von 3° C auf. Nachteilig an dieser Trocknungsanlage sind der regelmäßig am Druckluftkompressor durchzuführende Service und der hohe Energieverbrauch.

Eine Vorrichtung der eingangs genannten Art ist aus der DE 198 08 011 C1 bekannt. Diese Vorrichtung zur Kältetrocknung des zu trocknenden Gases weist zwei parallele Zweige auf, durch die das Gas im Gegentakt geführt und kältegetrocknet wird. Der Zweig, durch den das Gas gerade nicht geführt wird, wird jeweils regeneriert, wobei Eisablagerungen aufgetaut und entfernt werden. Hierzu wird ein Teilstrom des der Trocknungsvorrichtung zugeführten warmen Gases vor der Abkühlung des Gases vom Hauptstrom abgezweigt und durch den gerade passiven Kühlzweig geführt. In der Folge wird dieser Teilstrom zusammen mit dem Hauptstrom dem anderen Kühlzweig zugeführt. Nachteilig hierbei ist es unter anderem, dass die vom Teilstrom im passiven Kühlzweig aufgenommene zusätzliche Feuchtigkeit zu einer rascheren Vereisung des aktiven Kühlzweiges führt, sodass häufigere Umschaltvorgänge zwischen den Zweigen erforderlich sind. Die gesamte Effektivität der Anlage wird dabei verringert.

Aufgabe der Erfindung ist es, eine Trocknungsvorrichtung der eingangs genannten Art bereitzustellen, mit der eine niedrige Taupunkttemperatur des getrockneten Gases und ein geringer Energieverbrauch erreichbar sind. Erfindungsgemäß gelingt dies durch eine Trocknungsvorrichtung mit den Merkmalen des Patentanspruchs 1.

Durch den Luftförderer für Umgebungsluft, mit welchem über die Umgebungsluft-Eingangsleitung durch einen jeweiligen Kühlzweig in seinem passiven Zustand Umgebungsluft förderbar ist, die nach Durchströmen des Kühlzweiges durch die Umgebungsluft-Ausgangsleitung abströmt, kann der jeweilige passive Kühlzweig in einfacher Weise abgetaut und regeneriert werden.

In einer vorteilhaften Ausführungsform der Erfindung ist vorgesehen, dass in den Kühlzweigen jeweils mindestens ein Gas/Gas-Wärmetauscher angeordnet ist, der einen ersten Kanal, durch den das zu trocknenden Gas vor seiner Durchführung durch den ersten Kanal des Gas/Kältemittel-Wärmetauschers geführt ist, und einen zweiten Kanal aufweist, durch den das zu trocknende Gas nach seiner Durchführung durch den ersten Kanal des Gas/Kältemittel-Wärmetauschers geführt ist.

Weiters ist es bevorzugt, dass die Trocknungsvorrichtung mindestens einen Gas/Gas-Wärmetauscher umfasst, der einen ersten Kanal, durch den das zu trocknende Gas vor seiner Durchführung durch einen der Kühlzweige und einen zweiten Kanal aufweist, durch den das zu trocknende Gas nach seiner Durchführung durch einen der Kühlzweige geführt ist. Auf diese Weise kann eine sehr energiesparende Trocknungsvorrichtung bereitgestellt werden.

In einer vorteilhaften Ausführungsform der Erfindung ist vorgesehen, dass im passiven Zustand eines jeweiligen Kühlzweiges zumindest zeitweilig der zweite Kanal des Gas/Kältemittel-Wärmetauschers dieses Kühlzweiges einen Kondensator für das im Kältemittel-Kreislauf umlaufende Kältemittel bildet. Es wird dadurch eine besonders effektive Regenerierung des passiven Kühlzweiges erreicht.

Eine erfindungsgemäße Trocknungsvorrichtung kann robust und langlebig, hierbei kostengünstig ausgebildet werden.

Weitere Vorteile und Einzelheiten der Erfindung werden im Folgenden anhand der beiliegenden Zeichnung erläutert. In dieser zeigen:
- Fig. 1: ein Schema eines Ausführungsbeispiels einer erfindungsgemäßen Trocknungsvorrichtung ohne den Kältemittelkreislauf;
- Fig. 2: eine mögliche Ausführungsform des Kältemittelkreislaufes;
- Fig. 3: und Fig. 4 eine Ansicht und eine perspektivische Darstellung eines Umschaltventils und
- Fig. 5: und Fig. 6 schematische Darstellungen von möglichen Ausbildungsformen von Trocknungsanlagen mit einer erfindungsgemäßen Trocknungsvorrichtung.

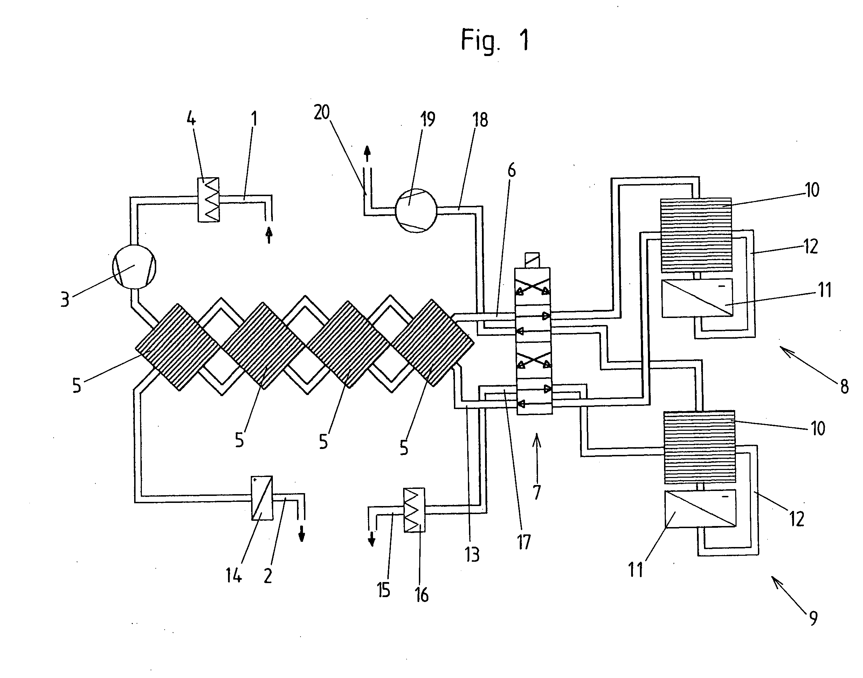

In Fig. 1 ist ein Ausführungsbeispiel einer erfindungsgemäßen Trocknungsvorrichtung ohne den Kältemittelkreislauf schematisch dargestellt. Das zu trocknende Gas, insbesondere Luft, wird durch eine Gas-Eingangsleitung 1 zugeführt und strömt nach seiner Trocknung durch eine Gas-Ausgangsleitung 2 ab. Die Durchführung des Gases durch die Trocknungsvorrichtung erfolgt mittels eines, hier im Bereich der Gas-Eingangsleitung 1 angeordneten, Gas-Förderers 3 in Form eines Ventilators bzw. Gebläses. In der Gas-Eingangsleitung 1 ist vor dem Gas-Förderer 3 weiters ein Luftfilter 4 angeordnet. Das zu trocknende Gas wird weiters durch mindestens einen Gas/Gas-Wärmetauscher 5 geführt, wobei vorzugsweise mehrere solche Gas/Gas-Wärmetauscher 5 oder ein mehrstufiger Gas/Gas-Wärmetauscher vorhanden sind/ist. In den Gas/Gas-Wärmetauschern 5 erfolgt eine erste Abkühlung des zu trocknenden Gases, wobei der Taupunkt des zu trocknenden Gases vorzugsweise noch nicht erreicht wird, sodass in den Gas/Gas-Wärmetauschern 5 noch kein Kondensat ausfällt. Im Falle des Einsatzes der Trocknungsvorrichtung in einem geschlossenen Kreislauf einer Trocknungsanlage gilt dies zumindest für den Dauerbetrieb der Trocknungsanlage. Beispielsweise beträgt die Taupunkttemperatur des zu trocknenden Gases in der Gas-Eingangsleitung 1 im Dauerbetrieb weniger als -5°C. Die Temperatur des zu trocknenden Gases am Ausgang des letzten Gas/Gas-Wärmetauschers 5, der sich im Bereich vor der Aufspaltung in parallele Zweige befindet, liegt vorzugsweise im Bereich zwischen 0°C und 10°C.

Das nach Durchlaufen der Gas/Gas-Wärmetauscher 5 durch die Gas-Leitung 6 strömende Gas wird in der Folge mittels des Umschaltventils 7 einem von zwei parallelen Kühlzweigen 8, 9 zugeführt. Bei der in Fig. 1 dargestellten Stellung des Umschaltventils 7 wird das zu trocknende Gas dem Kühlzweig 8 zugeführt. Im jeweiligen Kühlzweig 8, 9 gelangt es zunächst durch den ersten Kanal (Durchgang) eines Gas/Gas-Wärmetauschers 10, in welchem es weiter abgekühlt wird. Es kann hierbei bereits eine Abkühlung unter die Taupunkttemperatur des Gases erfolgen, sodass im Gas/Gas-Wärmetauscher 10 Kondensat ausfällt. Da die Temperatur des Gases hierbei bevorzugterweise unter 0°C liegt, schlägt sich das Kondensat als Eis im ersten Kanal des Gas/Gas-Wärmetauschers 10 nieder.

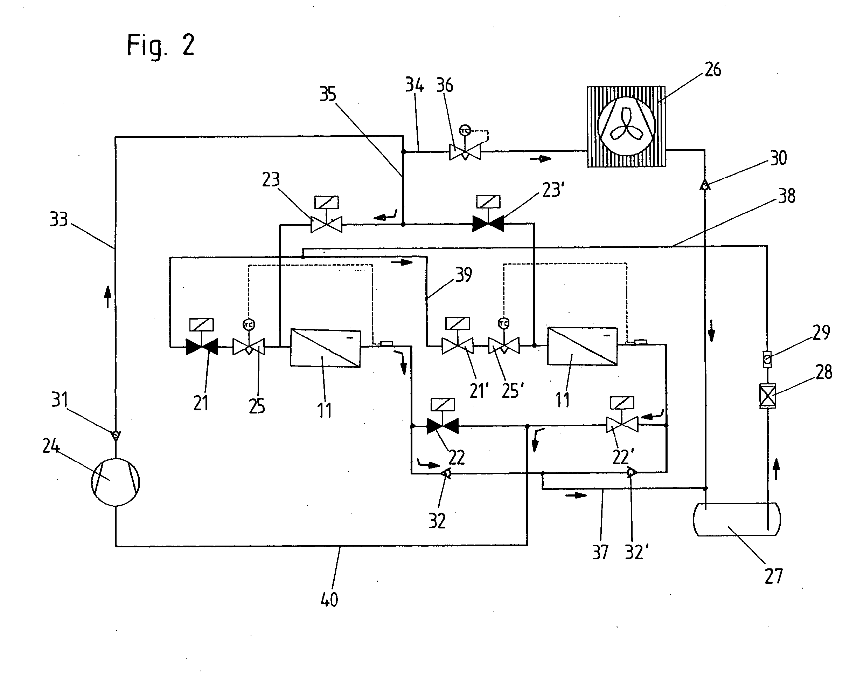

In der Folge gelangt das Gas in den ersten Kanal eines Gas/Kältemittel-Wärmetauschers 11, in welchem eine weitere Abkühlung des Gases erfolgt. Zu diesem Zweck wird durch den zweiten Kanal des Gas/Kältemittel-Wärmetauschers 11 mittels eines in Fig. 1 nicht dargestellten Kältemittlel-Kreislaufs ein Kältemittel geführt, wobei der zweite Kanal des Gas/Kältemittel-Wärmetauschers 11 den Verdampfer für das im Kältemittel-Kreislauf umlaufende Kältemittel bildet. Der Kältemittel-Kreislauf wird weiter unten anhand von Fig. 2 erläutert werden.

Am Ausgang des Gas/Kältemittel-Wärmetauschers 11 weist das Gas eine Temperatur von -20°C oder weniger auf. Je nach Einsatzzweck des getrockneten Gases kann die Temperatur am Ausgang des Gas/Kältemittel-Wärmetauschers 11 auch auf -35°C oder weniger abgesenkt sein.

Im ersten Kanal des Gas/Kältemittel-Wärmetauschers 11 fällt Kondensat aus, das sich als Eis absetzt.

Nach Verlassen des Gas/Kältemittel-Wärmetauschers 11 strömt das getrocknete und abgekühlte Gas durch die Leitung 12 in den zweiten Kanal des Gas/Gas-Wärmetauschers 10, worin es eine erste Erwärmung erfährt. Das Gas gelangt weiters zum Umschaltventil 7 und von dort in die Gas-Leitung 13, in die die parallelen Kühlzweige 8, 9 mittels des Umschaltventils 7 wieder zusammengeführt worden sind. In der Folge wird das Gas in den Gas/Gas-Wärmetauschern 5 weiter erwärmt und wird nach Durchströmen der Gas/Gas-Wärmetauscher 5 einer Heizung 14 zugeführt, in der es auf die gewünschte Temperatur erwärmt wird, mit der es durch die Gas-Ausgangsleitung 2 austritt.

Ein jeweiliger Kühlzweig 8, 9 befindet sich gerade in seinem "aktiven Zustand", wenn das zu trocknende Gas durch ihn hindurch geführt und auf die gewünschte Minimaltemperatur abgekühlt wird. Zu einem jeweiligen Zeitpunkt ist jeweils gerade einer der beiden Kühlkreise 8, 9 in seinem aktiven Zustand, in der Stellung des Umschaltventils 7 gemäß Fig. 1 ist dies gerade der Kühlzweig 8. In diesem Sinne arbeiten die Kühlkreise 8, 9 im "Wechselbetrieb" bzw. "Gegentakt".

Im aktiven Zustand eines jeweiligen Kühlzweiges 8, 9 wird der erste Kanal des Gas/Kältemittel-Wärmetauschers 11 und gegebenenfalls auch der erste Kanal des Gas/Gas-Wärmetauschers 10 zunehmend mit vereistem Kondensat zugesetzt. Es ist daher nach einer gewissen Zeit eine Regeneration dieses Kühlzweiges 8, 9 erforderlich. Hierzu wird das Umschaltventil 7 umgeschaltet und weiters werden Ventile im Kältemittel-Kreislauf umgeschaltet, wie dies weiter unten anhand von Fig. 2 erläutert werden wird. Es befindet sich dann der andere der beiden Kühlzweige 8, 9 in seinem aktiven Zustand, während sich der Kühlzweig 8, 9, der sich früher in seinem aktiven Zustand befunden hat, nunmehr in seinem passiven Zustand befindet und regeneriert wird.

Zur Regenerierung des sich in seinem passiven Zustand befindenden Kühlzweiges 8, 9 ist eine Umgebungsluft-Eingangsleitung 15 vorhanden, durch welche Umgebungsluft zuströmen kann. In dieser Umgebungsluft-Eingangsleitung 15 ist ein Luftfilter 16 angeordnet. Die Umgebungsluft strömt weiter durch die Umgebungsluft-Leitung 17 zum Umschaltventil 7 und gelangt durch dieses in denjenigen der Kühlzweige 8, 9, der sich in seinem passiven Zustand befindet. In der Stellung des Umschaltventils 7 gemäß Fig. 1 ist dies der Kühlzweig 9. Die Umgebungsluft wird in diesem Kühlzweig 8, 9 zunächst durch den zweiten Kanal des Gas/Gas-Wärmetauschers 10 geführt und wird weiters über die Leitung 12 durch den ersten Kanal des Gas/Kältemittel-Wärmetauschers 11 geführt. Weiters wird die Umgebungsluft durch den ersten Kanal des Gas/Gas-Wärmetauschers 10 geführt. Nach Verlassen des Wärmetauschers 10 wird die Umgebungsluft zum Umschaltventil 7 und durch dieses in die Umgebungsluft-Leitung 18 geführt. Die Förderung der Umgebungsluft erfolgt durch den darauffolgenden Umgebungsluft-Förderer 19 (in Form eines Gebläses bzw. Ventilators) und die Umgebungsluft wird weiters durch die Umgebungsluft-Ausgangsleitung 20 wieder der Umgebung zugeführt. Der Umgebungsluft-Förderer 19 dient somit zur Förderung der Umgebungsluft durch die Umgebungsluft-Eingangsleitung 15 und den jeweils sich in seinem passiven Zustand befindenden Kühlzweig 8, 9 (zumindest für einen Teil der Zeitdauer, in welchem sich der Kühlzweig 8, 9 in seinem passiven Zustand befindet) und durch die Umgebungsluft-Ausgangsleitung 20.

Während die Umgebungsluft durch den ersten Kanal des Gas/Kältemittel-Wärmetauschers 11 des sich in seinem passiven Zustand befindenden Kühlzweig 8, 9 geführt wird, ist es bevorzugt, durch den zweiten Kanal des Gas/Kältemittel-Wärmetauschers 11 Kältemittel zu führen, wobei der zweite Kanal des Gas/Kältemittel-Wärmetauschers 11 den Kondensator des Kältemittel-Kreislaufs bildet. Es wird dadurch im Kältemittel-Kreislauf ohnehin anfallende Wärme dem Gas/Kältemittel-Wärmetauscher 11 zugeführt, wodurch eine effektive Abtauung desselben erreicht wird. Weiters wird die durch den ersten Kanal des Gas/Kältemittel-Wärmetauschers 11 strömende Umgebungsluft erwärmt, sodass in der Folge die Abtauung von eventuell im ersten Kanal des Gas/Gas-Wärmetauschers 10 vorhandenen Eises verbessert wird.

Wenn im Rahmen dieser Schrift von "ersten und zweiten Kanälen" von Wärmetauschern die Rede ist, so könnten diese beispielsweise auch als "erste und zweite bzw. primäre und sekundäre Durchgänge" oder "Primär- und Sekundärkreise" bezeichnet werden.

Eine mögliche Ausführungsform des Kältemittel-Kreislaufs wird in der Folge anhand von Fig. 2 erläutert. Im Kältemittel-Kreislauf sind mehrere Ventile 21, 21', 22, 22', 23, 23' angeordnet, die als öffen- und schließbare Absperrventile ausgebildet sind. Die Ventile 21, 21' und 22, 22' bilden hierbei Teile der Umschalteinrichtung zur Umschaltung der Kühlzweige 8, 9 zwischen ihrem aktiven und passiven Zustand, wobei zu dieser Umschalteinrichtung weiters das Umschaltventil 7 und eine in den Fig. nicht dargestellte Steuereinheit gehört. Über die Ventile 23, 23' kann im passiven Zustand eines Kühlzweiges 8, 9 der zweite Kanal des in diesem Kühlzweig 8, 9 sich befindenden Gas/Kältemittel-Wärmetauschers 11 zum Betrieb als Kondensator des Kältemittel-Kreislaufs zugeschaltet werden.

In Fig. 2 ist ein bestimmter Schaltzustand des Kältemittel-Kreislaufs symbolisiert, wobei eine ausgefüllte Kontur eines Ventils 21, 21', 22, 22', 23, 23' den geschlossenen Zustand dieses Ventils symbolisiert und eine leere Kontur den geöffneten Zustand. Die Pfeile symbolisieren die Strömungsrichtung des Kältemittels.

Der Kältemittel-Kreislauf umfasst neben den genannten Ventilen einen Verdichter 24, die den Gas/Kältemittel-Wärmetauschern 11 bei ihrem Betrieb als Verdampfer jeweils vorgeschalteten Expansionsventile 25, 25', den separaten Kondensator 26, dem ein Druckregelventil 36 vorgeschaltet ist, den Sammelbehälter 27, ein Trocknerfilter 28, ein Schauglas 29 und Rückschlagventile 30, 31, 32, 32'.

Bei dem in Fig. 2 dargestellten Schaltzustand wird der in Fig. 2 rechts dargestellte Gas/Kältemittel-Wärmetauscher 11 gerade als Verdampfer betrieben und der Kühlzweig 8, 9, in dem dieser Gas/Kältemittel-Wärmetauscher angeordnet ist, befindet sich in seinem aktiven Zustand. Das vom Verdichter 24 geförderte Kältemittel gelangt durch das Rückschlagventil 31 in die Leitung 33 und verzweigt sich in der Folge in die Leitungen 34 und 35. Das durch die Leitung 34 fließende Kältemittel gelangt durch das Druckregelventil 36 in den Kondensator 26 und kondensiert dort und gelangt in der Folge durch das Rückschlagventil 30 in den Sammelbehälter 27. Das durch die Leitung 35 strömende Kältemittel gelangt durch das Ventil 23 in den zweiten Kanal des Gas/Kältemittel-Wärmetauschers 11 und kondensiert dort und gelangt weiters durch das Rückschlagventil 32 und die Leitung 37 in den Sammelbehälter 27. Der zweite Kanal des in Fig. 2 links dargestellten Gas/Kältemittel-Wärmetauschers 11 arbeitet somit in dieser Schaltstellung als Kondensator. Der Kühlzweig 8, 9 in dem sich dieser Gas/Kältemittel-Wärmetauscher 11 befindet wird gerade regeneriert, wobei Umgebungsluft durch diesen Kühlzweig 8, 9 gefördert wird. Nachdem die Regeneration abgeschlossen ist, kann die Durchführung von Umgebungsluft beendet werden und das Ventil 23 geschlossen werden, sodass der Kondensator 26 nunmehr den einzigen Kondensator des Kältemittel-Kreislaufs bildet. Der betreffende Kühlkreis befindet sich aber immer noch in seinem passiven Zustand.

Der zweite Kanal des Gas/Kältemittel-Wärmetauschers 11, der sich im gerade aktiven Kühlzweig 8, 9 befindet, wird als Verdampfer des Kältemittel-Kreislaufs betrieben. Hierbei fließt durch die Wirkung des Verdichters 24 Kältemittel aus dem Sammelbehälter 27 durch das Trocknerfilter 28 und das Schauglas 29 und weiter durch die Leitungen 38, 39 und durch das geöffnete Ventil 21' und das Expansionsventil 25' in den zweiten Kanal des in Fig. 2 rechts dargestellten Gas/Kältemittel-Wärmetauschers 11, in welchem es verdampft. Das verdampfte Kältemittel wird durch das geöffnete Ventil 22' in die Leitung 40 zum Verdichter 24 geführt.

Kurz vor die Umschaltung der Kühlzweige 8, 9 zwischen ihrem aktiven und passiven Zustand erfolgt, kann der Gas/Kältemittel-Wärmetauscher 11, der sich im noch passiven Kühlzweig 8, 9 befindet, bereits gekühlt werden. Hierzu werden auch die Ventile 21, 22 geöffnet (das Ventil 23 wurde bereits zu einem früheren Zeitpunkt geschlossen), sodass nunmehr beide Gas/Kältemittel-Wärmetauscher 11 als Verdampfer arbeiten.

In der Folge wird der bisher sich in seinem aktiven Zustand befindende Kühlzweig in seinen passiven Zustand umgeschaltet und umgekehrt. Hierzu wird das Umschaltventil 7 betätigt und werden die Ventile 21', 22' geschlossen (die Ventile 21, 22 müssen spätestens jetzt geöffnet sein; vorzugsweise wurden diese Ventile bereits etwas früher geöffnet, wie dies beschrieben wurde). Das Ventil 23 bleibt geschlossen. Um den Gas/Kältemittel-Wärmetauscher 11, der sich im passiven Kühlzweig 8, 9 befindet, als zusätzlichen Kondensator zu betreiben (für die Zeitspanne der Regeneration), kann weiters das Ventil 23' für diese Zeitspanne geöffnet werden.

Obwohl der Kältemittel-Kreislauf gemäß Fig. 2 eine bevorzugte Ausführungsform für den Kältemittel-Kreislauf darstellt, wäre auch eine modifizierte Ausbildung des Kältemittel-Kreislaufs denkbar und möglich. Beispielsweise könnte auch die Möglichkeit entfallen, die zweiten Kanäle der Gas/Kältemittel-Wärmetauscher 11 als Kondensatoren zu betreiben, sodass der Kondensator 26 den einzigen Kondensator des Kältemittel-Kreislaufs darstellen würde. Die Regeneration des sich in seinem passiven Zustand befindenden Kühlzweigs 8, 9 könnte dann ohne zusätzliche Erhitzung des Gas/Kältemittel-Wärmetauschers 11 und/oder der Umgebungsluft durchgeführt werden oder es könnte eine andere Heizeinrichtung (für den Gas/Kältemittel-Wärmetauscher 11 oder die zugeführte Umgebungsluft) vorgesehen werden (was allerdings mit einem Mehraufwand an Energie verbunden wäre).

Prinzipiell denkbar und möglich wäre es auch, für jeden der beiden Gas/Kältemittel-Wärmetauscher 11 einen separaten Kältemittelkreislauf vorzusehen.

Die verschiedenen Komponenten des Kältemittel-Kreislaufs, beispielsweise der Verdichter 24, die Expansionsventile 25, 25', das Trocknerfilter 28 und das Schauglas 29 können in herkömmlicher Weise ausgebildet sein.

Im gezeigten Ausführungsbeispiel ist ein gemeinsames Umschaltventil 7 vorhanden, mittels dem das zu trocknende Gas einerseits und die vom Umgebungsluft-Förderer 19 geförderte Umgebungsluft andererseits wechselweise den beiden Kühlzweigen 8, 9 zugeführt werden.

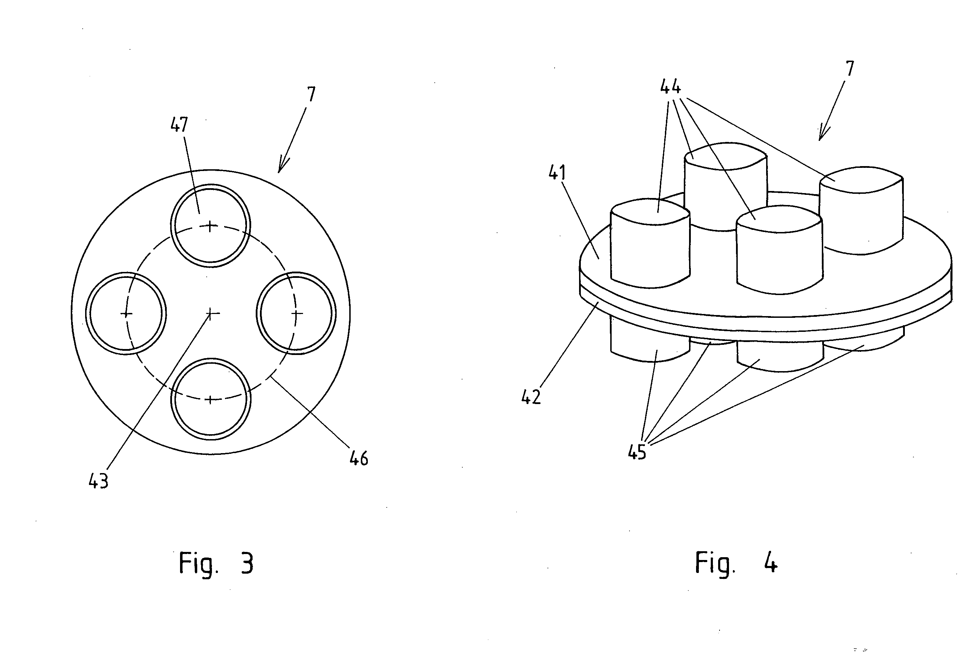

Ein besonders vorteilhaftes Ausführungsbeispiel für das Umschaltventil 7 ist in den Fig. 3 und 4 dargestellt. Das Umschaltventil 7 besitzt hierbei erste und zweite Teile 41, 42, die gegeneinander um eine Drehachse 43 verdrehbar sind. Im Falle von zwei parallelen Kühlzweigen 8, 9 weisen beide Teile 41, 42 jeweils vier Anschlüsse 44, 45 auf, die entlang einer gedachten Kreislinie 46 um die Drehachse 43 in gleichmäßigen Abständen voneinander angeordnet sind. Die Anschlüsse 44, 45 werden von Durchgangsöffnungen 47 durch das erste bzw. zweite Teil 41, 42 fortgesetzt. Im miteinander fluchtenden Zustand der Anschlüsse 44, 45 bzw. Durchgangsöffnungen 47 des ersten und zweiten Teils 41, 42 sind die Durchgangsöffnungen 47 in den beiden Teilen 41, 42 gegeneinander abgedichtet. An die Anschlüsse des ersten Teils 41 werden die Leitungen 6, 18, 17, 13 angeschlossen, wobei in Umfangsrichtung gesehen Gas- und Umgebungsluftleitungen einander abwechseln. An die Anschlüsse 45 des zweiten Teils 42 werden die Eingangs- und Ausgangsleitungen der beiden Kühlzweige 8, 9 angeschlossen, wobei in Umfangsrichtung jeweils Leitungen aufeinander folgen, die zu verschiedenen Kühlzweigen 8, 9 gehören.

Zur Umschaltung des Umschaltventils 7 von der in Fig. 1 dargestellten Stellung in die andere Stellung, die das Umschaltventil 7 gemäß Fig. 1 einnehmen kann, werden die beiden Teile 41, 42 um 90° gegeneinander verdreht und zur Rückschaltung werden die beiden Teile wiederum zurückgedreht. Die an das Umschaltventil 7 angeschlossenen Leitungen müssen somit eine gewisse Flexibilität zur Ermöglichung dieser Verdrehung aufweisen, zumindest auf einer der beiden Seiten des Ventils.

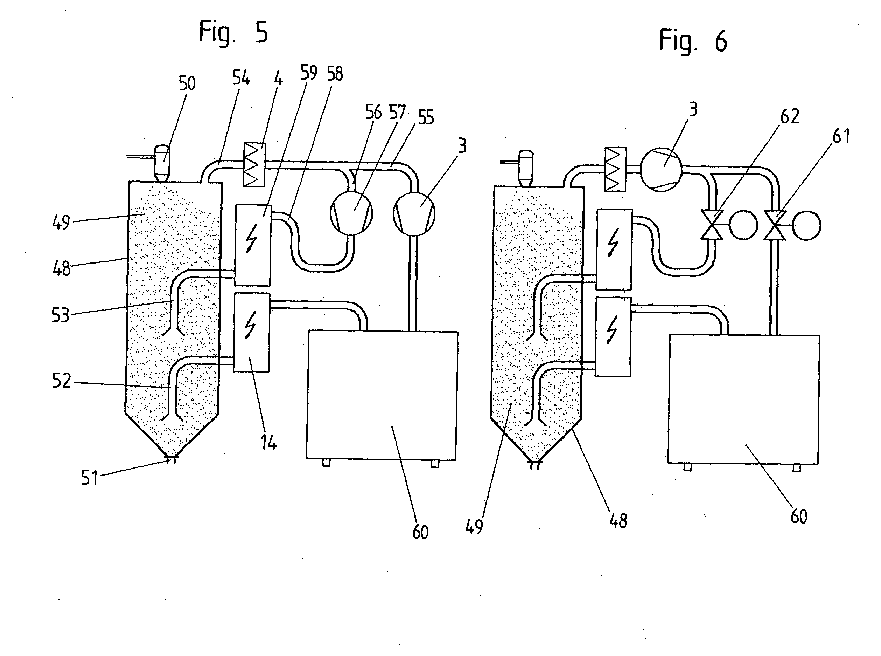

Ein Ausführungsbeispiel einer Trocknungsanlage, bei der eine erfindungsgemäße Trocknungsvorrichtung zum Einsatz kommen kann, ist in Fig. 5 dargestellt. Die Trocknungsanlage weist einen Trocknungsbehälter 48 zur Aufnahme von zu trocknendem Material 49 auf. Beim zu trocknenden Material 49 handelt es sich hier um Schüttgut, insbesondere Kunststoffgranulat, welches dem Trocknungsbehälter 48 über eine Zuführvorrichtung 50, welche beispielsweise ein Saugfördergerät aufweist, zugeführt wird. Nach der Trocknung wird das Material 49 durch die Entnahmeöffnung 51 entnommen.

Zur Trocknung des Materials 49 wird Gas durch die Einblasleitungen 52, 53 in den Trocknungsbehälter eingeblasen. Durch die weiter bei der Entnahmeöffnung 51 liegende Einblasleitung 52 strömt mittels einer erfindungsgemäßen Trocknungsvorrichtung getrocknetes Gas, insbesondere Luft. Das durch die Einblasleitungen 52, 53 eingeblasene Gas wird nach dem Durchströmen des Materials 49 im Trocknungsbehälter 48 durch die Auslassleitung 54 abgeführt, wobei die Auslassleitung 54 im Bereich des oberen Endes des Trocknungsbehälters 48 von diesem ausgeht. Die Auslassleitung 54 stellt gleichzeitig die Gas-Eingangsleitung der erfindungsgemäßen Trocknungsvorrichtung dar. Das Gas wird weiters durch ein Luftfilter 4 geführt. In der Folge verzweigt sich das Gas in die beiden Gasleitungen 55, 56, in welche es jeweils mittels eines Gas-Förderers 3, 57 gefördert wird. Der Gasförderer 57 fördert das Gas weiter durch die Gas-Leitung 58 und die Heizung 59, in welcher das Gas wiederum auf die gewünschte Temperatur erwärmt wird, um durch die Einblasleitung 53 in den Trocknungsbehälter 48 eingeblasen zu werden. Das vom Gas-Förderer 3 geförderte Gas gelangt durch das Trocknungsaggregat 60 über die Heizung 14 und durch die Einblasleitung 52 zurück in den Trocknungsbehälter 58. Das Trocknungsaggregat 60 ist hierbei in erfindungsgemäßer Weise ausgebildet. Es kann beispielsweise den in Fig. 1 und 2 dargestellten Aufbau aufweisen (wobei im Aggregat 60 die Komponenten Luftfilter 4, Gas-Förderer 3 und Heizung 14, welche in Fig. 5 separat dargestellt sind, entfallen).

Ein ähnliches Ausführungsbeispiel einer Trocknungsanlage ist in Fig. 6 dargestellt. Hier ist aber vor der Verzweigung in die Gas-Leitungen 55, 56 ein gemeinsamer Gas-Förderer 3 vorgesehen. In den Gas-Leitungen 55, 56 ist jeweils ein Drosselventil (bzw. eine Drosselklappe) 61, 62 angeordnet, durch die die gewünschte Aufteilung des Gasstroms in die Gas-Leitungen 55, 56 geregelt werden kann. Ansonsten entspricht der Aufbau demjenigen von Fig. 5.

Bei der Regeneration eines Kühlzweiges 8, 9 kann das von der durchgeblasenen Umgebungsluft aufgetaute Kondensat mehr oder weniger verdunsten und von der durchströmenden Umgebungsluft mitgenommen werden. Es können weiters im Gas/Kältemittel-Wärmetauscher und gegebenenfalls auch im Gas/Gas-Wärmetauscher Abflüsse vorhanden sein, durch welche aufgetautes Kondensat in einen Sammelbehälter abfließen kann. Solche in den Fig. nicht dargestellte Abflüsse können jeweils einen Siphon aufweisen.

Unterschiedliche Modifikationen der beschriebenen Ausführungsbeispiele sind denkbar und möglich, ohne den Bereich der Erfindung zu verlassen. Anstelle von zwei im Gegentakt arbeitenden parallelen Kühlzweigen 8, 9 könnten beispielsweise auch mehr als zwei solche Zweige vorgesehen sein, wobei sich zu jedem Zeitpunkt mindestens einer der Kühlzweige 8, 9 in seinem aktiven Zustand befinden würde. In den einzelnen Kühlzweigen 8, 9 könnten auch mehrere hintereinander geschaltete Gas/Gas-Wärmetauscher 10 angeordnet sein (analog zur Hintereinanderschaltung der Gas/Gas-Wärmetauscher 5). Der Umgebungsluft-Förderer 19 könnte beispielsweise auch im Bereich der Umgebungsluft-Ausgangsleitung 20 angeordnet sein.

### Legende

### zu den Hinweisziffern:

- 1: Gas-Eingangsleitung
- 2: Gas-Ausgangsleitung
- 3: Gas-Förderer
- 4: Luftfilter
- 5: Gas/Gas-Wärmetauscher
- 6: Gas-Leitung
- 7: Umschaltventil
- 8: Kühlzweig
- 9: Kühlzweig
- 10: Gas/Gas-Wärmetauscher
- 11: Gas/Kältemittel-Wärmetauscher
- 12: Leitung
- 13: Gas-Leitung
- 14: Heizung
- 15: Umgebungsluft-Eingangsleitung
- 16: Luftfilter
- 17: Umgebungsluft-Leitung
- 18: Umgebungsluft-Leitung
- 19: Umgebungsluft-Förderer
- 20: Umgebungsluft-Ausgangsleitung
- 21, 21': Ventil
- 22, 22': Ventil
- 23, 23': Ventil
- 24: Verdichter
- 25, 25': Expansionsventil
- 26: Kondensator
- 27: Sammelbehälter
- 28: Trocknerfilter
- 29: Schauglas
- 30: Rückschlagventil
- 31: Rückschlagventil
- 32, 32': Rückschlagventil
- 33: Leitung
- 34: Leitung
- 35: Leitung
- 36: Druckregelventil
- 37: Leitung
- 38: Leitung
- 39: Leitung
- 40: Leitung
- 41: erstes Teil
- 42: zweites Teil
- 43: Drehachse
- 44: Anschluss
- 45: Anschluss
- 46: Kreislinie
- 47: Durchgangsöffnung
- 48: Trocknungsbehälter
- 49: Material
- 50: Zuführvorrichtung
- 51: Entnahmeöffnung
- 52: Einblasleitung
- 53: Einblasleitung
- 54: Auslassleitung
- 55: Gas-Leitung
- 56: Gas-Leitung
- 57: Gas-Förderer
- 58: Gas-Leitung
- 59: Heizung
- 60: Trocknungsaggregat
- 61: Drosselventil
- 62: Drosselventil

## Patentansprüche

1. Trocknungsvorrichtung für die Trocknung eines Gases, welches insbesondere in einem Kreislauf durch einen zu trocknendes Material aufnehmenden Trocknungsbehälter einer Trocknungsanlage geführt ist, mit einer Gas-Eingangsleitung (1) zur Zuführung des zu trocknenden Gases und mit einer Gas-Ausgangsleitung (2) für die Abführung des getrockneten Gases und mit parallelen Kühlzweigen (8, 9), welche mittels einer Umschalteinrichtung (7, 21, 21', 22, 22') jeweils zwischen einem aktiven Zustand, in welchem der Kühlzweig (8, 9) vom zu trocknenden Gas durchströmt wird und im Kühlzweig (8, 9) eine Kältetrocknung des Gases erfolgt, und einem passiven Zustand umschaltbar sind, wobei sich zu einem jeweiligen Zeitpunkt zumindest einer der Kühlzweige (8, 9) in seinem aktiven Zustand befindet und wobei in den Kühlzweigen (8, 9) jeweils ein Gas/Kältemittel-Wärmetauscher (11) angeordnet ist, der einen ersten Kanal, durch den im aktiven Zustand dieses Kühlzweiges (8, 9) das zu trocknende Gas strömt, und einen zweiten Kanal aufweist, der im aktiven Zustand dieses Kühlzweiges (8, 9) einen Verdampfer für ein in mindestens einem Kältemittel-Kreislauf umlaufendes Kältemittel bildet, **dadurch gekennzeichnet, dass** die Trocknungsvorrichtung weiters eine Umgebungsluft-Eingangsleitung (15), eine Umgebungsluft-Ausgangsleitung (20) und einen Umgebungsluft-Förderer (19) umfasst, wobei im passiven Zustand eines jeweiligen Kühlzweiges (8, 9) zumindest zeitweilig die Umgebungsluft-Eingangsleitung (15) und Umgebungsluft-Ausgangsleitung (20) mittels der Umschalteinrichtung mit diesem Kühlzweig (8, 9) verbunden sind und der Umgebungsluft-Förderer (19) Umgebungsluft durch den ersten Kanal des in diesem Kühlzweig (8, 9) angeordneten Gas/Kältemittel-Wärmetauschers (11) fördert.

2. Trocknungsvorrichtung nach Anspruch 1, **dadurch gekennzeichnet, dass** in den Kühlzweigen (8, 9) jeweils mindestens ein Gas/Gas-Wärmetauscher (10) angeordnet ist, der einen ersten Kanal, durch den das zu trocknenden Gas vor seiner Durchführung durch den ersten Kanal des Gas/Kältemittel-Wärmetauschers geführt ist, und einen zweiten Kanal aufweist, durch den das zu trocknende Gas nach seiner Durchführung durch den ersten Kanal des Gas/Kältemittel-Wärmetauschers geführt ist.

3. Trocknungsvorrichtung nach Anspruch 1 oder Anspruch 2, **dadurch gekennzeichnet, dass** die Trocknungsvorrichtung mindestens einen Gas/Gas-Wärmetauscher (5) umfasst, der einen ersten Kanal, durch den das zu trocknende Gas vor seiner Durchführung durch einen der Kühlzweige (8, 9), und einen zweiten Kanal aufweist, durch den das zu trocknende Gas nach seiner Durchführung durch einen der Kühlzweige (8, 9) geführt ist.

4. Trocknungsvorrichtung nach einem der Ansprüche 1 bis 3, **dadurch gekennzeichnet, dass** der Umgebungsluft-Förderer (19) im Bereich der Umgebungsluft-Eingangsleitung (15) oder Umgebungsluft-Ausgangsleitung (20) angeordnet ist.

5. Trocknungsvorrichtung nach einem der Ansprüche 1 bis 4, **dadurch gekennzeichnet, dass** die Trocknungsvorrichtung einen, vorzugsweise im Bereich der Gas-Eingangsleitung (1) angeordneten, Gas-Förderer (3) zur Durchführung des zu trocknenden Gases durch die Trocknungsvorrichtung umfasst.

6. Trocknungsvorrichtung nach einem der Ansprüche 1 bis 5, **dadurch gekennzeichnet, dass** die Trocknungsvorrichtung eine im Bereich der Gas-Ausgangsleitung angeordnete Heizung (14) zur weiteren Erwärmung des getrockneten Gases aufweist.

7. Trocknungsvorrichtung nach einem der Ansprüche 1 bis 6, **dadurch gekennzeichnet, dass** im passiven Zustand eines jeweiligen Kühlzweiges (8, 9) zumindest zeitweilig der zweite Kanal des Gas/Kältemittel-Wärmetauschers (11) dieses Kühlzweiges einen Kondensator für das im mindestens einen Kältemittel-Kreislauf umlaufende Kältemittel bildet.

8. Trocknungsvorrichtung nach Anspruch 7, **dadurch gekennzeichnet, dass** der Kältemittel-Kreislauf einen weiteren Kondensator (26) aufweist.

9. Trocknungsvorrichtung nach einem der Ansprüche 1 bis 8, **dadurch gekennzeichnet, dass** im passiven Zustand eines jeweiligen Kühlzweiges (8, 9) vom Umgebungsluft-Förderer (19) durch den Kühlzweig (8, 9) geförderte Umgebungsluft den Kühlzweig (8, 9) in eine Strömungsrichtung durchströmt, die der Strömungsrichtung des im aktiven Zustand des Kühlzweiges (8, 9) durch den Kühlzweig (8, 9) geförderten zu trocknenden Gases entgegengesetzt ist.

10. Trocknungsvorrichtung nach einem der Ansprüche 1 bis 9, **dadurch gekennzeichnet, dass** die Umschalteinrichtung ein gemeinsames Umschaltventil (7) zur wechselweisen Durchführung des zu trocknenden Gases und der vom Umgebungsluft-Förderer (19) geförderten Umgebungsluft andererseits durch die beiden Kühizweige (8, 9) aufweist.

11. Trocknungsvorrichtung nach Anspruch 10, **dadurch gekennzeichnet, dass** das Umschaltventil (7) ein erstes Teil (41) und ein zweites Teil (42) umfasst, die gegeneinander um eine Drehachse (43) verdrehbar sind, wobei sowohl am ersten Teil (41) als auch am zweiten Teil (42) entlang einer gedachten Kreislinie (46) um die Drehachse (43) jeweils eine gleiche gerade Anzahl von mindestens vier Anschlüssen (44, 45) angeordnet sind, die in Umfangsrichtung der Kreislinie (46) gleichmäßig voneinander beabstandet sind und die von parallel zur Drehachse (43) durch das erste Teil (41) und das zweite Teil (42) sich erstreckenden Durchgangsöffnungen (47) fortgesetzt werden, wobei das erste Teil (41) und das zweite Teil (42) in Bereichen um die Durchgangsöffnungen (47) gegeneinander abgedichtet sind.

12. Trocknungsvorrichtung nach einem der Ansprüche 1 bis 11, **dadurch gekennzeichnet, dass** nur ein Kältemittel-Kreislauf vorhanden ist, wobei mittels Umschaltventilen (21, 21', 22, 22') das Kältemittel jeweils durch den zweiten Kanal des sich in seinem aktiven Zustand befindenden Gas/Kältemittel-Wärmetauscher (11) führbar ist, wobei der erste Kanal dieses Gas/Kältemittel-Wärmetauschers (11) den Verdampfer des Kältemittel-Kreislaufs bildet und ihm ein jeweiliges Expansionsventil (25, 25') vorgeschaltet ist.

13. Trocknungsvorrichtung nach Anspruch 12, **dadurch gekennzeichnet, dass** im Kältemittel-Kreislauf weiters Umschaltventile (23, 23') vorhanden sind, mittels derer zumindest ein Teil des Kältemittels durch den zweiten Kanal des Gas/Kältemittel-Wärmetauschers (11), der im mindestens einen sich in seinem passiven Zustand befindenden Kühlzweig (8, 9) angeordnet ist, führbar ist.

14. Verfahren zur Trocknung eines Gases, welches insbesondere in einem Kreislauf durch einen zu trocknendes Material aufnehmenden Trocknungsbehälter einer Trocknungsanlage geführt wird, wobei das zu trocknende Gas durch eine Gas-Eingangsleitung (1) zugeführt wird und nach seiner Trocknung durch eine Gas-Ausgangsleitung abgeführt wird und für seine Kältetrocknung wechselweise durch einen von mindestens zwei parallelen Kühlzweigen (8, 9) geführt wird, wobei sich der Kühlzweig (8, 9), durch den das zu trocknende Gas geführt wird und dabei kältegetrocknet wird in seinem aktiven Zustand befindet und der mindestens eine andere Kühlzweig (8, 9) sich in seinem passiven Zustand befindet und wobei in den Kühlzweigen (8, 9) jeweils ein Gas/Kältemittel-Wärmetauscher (11) angeordnet ist, der einen ersten Kanal, durch den im aktiven Zustand dieses Kühlzweiges das zu trocknende Gas geführt wird, und einen zweiten Kanal aufweist, der im aktiven Zustand dieses Kühlzweiges als Verdampfer für ein in mindestens einem Kältemittelkreislauf umlaufendes Kältemittel betrieben wird, **dadurch gekennzeichnet, dass** durch den mindestens einen sich in seinem passiven Zustand befindenden Kühlzweig (8, 9) zumindest für einen Teil der Zeitdauer des passiven Zustands mittels eines Umgebungsluft-Förderers (19) Umgebungsluft durchgeführt wird, welche dem Kühlzweig (8, 9) über eine Umgebungsluft-Eingangsleitung (15) zugeführt und vom Kühlzweig (8, 9) über eine Umgebungsluft-Ausgangsleitung (20) abgeführt wird.

15. Verfahren nach Anspruch 14, **dadurch gekennzeichnet, dass** die Umschaltung zwischen den aktiven und passiven Zuständen der Kühlzweige (8, 9) mittels einer Umschalteinrichtung erfolgt, die mindestens ein Umschaltventil (7) umfasst, mittels dem das zu trocknende Gas und die vom Umgebungsluft-Förderer (19) geförderte Umgebungsluft wechselweise durch die beiden Kühlzweige (8, 9) durchgeführt werden.

16. Verfahren nach Anspruch 14 oder Anspruch 15, **dadurch gekennzeichnet, dass** zumindest für einen Teil der Zeitdauer, über welche sich ein Kühlzweig (8, 9) sich in seinem passiven Zustand befindet, der zweite Kanal des Gas/Kältemittel-Wärmetauschers (11) dieses Kühlzweiges als Kondensator des mindestens einen Kältemittel-Kreislaufs betrieben wird.
